(19) Europäisches Patentamt
European Patent Office
Office européen des brevets

(11) EP 1 096 364 A2

(12) EUROPEAN PATENT APPLICATION

(43) Date of publication:
**02.05.2001 Bulletin 2001/18**

(51) Int. Cl.[7]: **G06F 3/12**

(21) Application number: **00123139.8**

(22) Date of filing: **25.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.10.1999 US 430359**

(71) Applicant:
**Hewlett-Packard Company,
A Delaware Corporation
Palo Alto, CA 94304 (US)**

(72) Inventor: **Verghese, Philip C.
Boise, Idaho 83713 (US)**

(74) Representative:
**Schoppe, Fritz, Dipl.-Ing.
Schoppe, Zimmermann & Stöckeler
Patentanwälte
Postfach 71 08 67
81458 München (DE)**

## (54) Estimation of time to complete a print job

(57) A printer driver (208) for estimating the amount of time (216) required for printing a print job. The time required for processing and printing a print job is estimated using an algorithm to calculate a complexity metric (212) for each page of the print job. The complexity metric for a page is based on three factors: the number of vectors on a page, the number of complex operations on the page and the bitmap complexity of the page. The value for each of the factors is multiplied by a different constant based on the characteristics of the printer used to print the print job. The estimated time (224) for the print job is also displayed to the user. The displayed estimated time (224) is decremented as the print job processing proceeds, counting down to zero as the print job is completed. The printer (210) provides print job status reports allowing the printer driver (208)to calculate the actual print time for each page as it is printed and to update the estimated print time (224) by comparison with the actual print time.

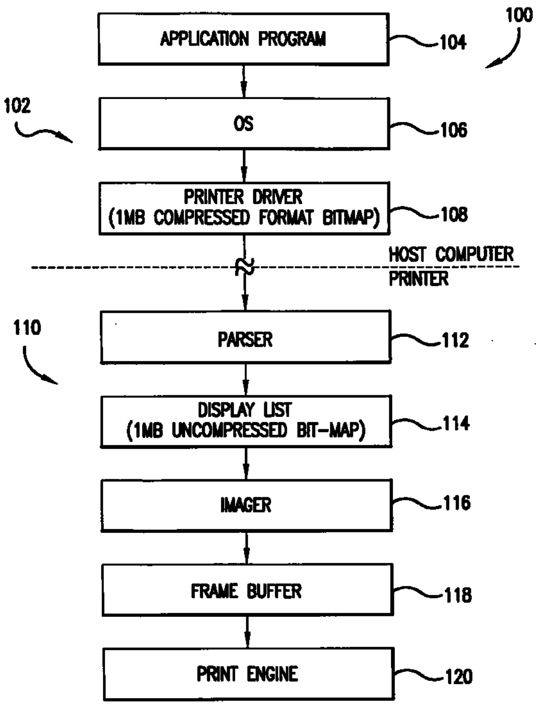


FIG.1
PRIOR ART

EP 1 096 364 A2

## Description

FIELD OF THE INVENTION

The present invention relates generally to processing documents and, more particularly, to a method and system for estimating the amount time required by a computer-printer system to print a document.

BACKGROUND OF THE INVENTION

Image processing has become a commonplace activity due to the capabilities and availability of the required hardware and software. Modern computer systems often include graphic capabilities that allow the display and printing of graphic images. Printing a page of text and/or graphic images requires the conversion of data from the format used on a host computer to a format used by the particular printer selected. Further, the processing of images and other graphical elements is generally more complex as compared to the processing of textual data. Given the availability of sophisticated word processing and other desktop publishing programs, documents generally no longer consist solely of text data, but rather include a variety of images. Thus, documents generally tend to be more complicated and hence require a greater amount of time, sometimes significantly greater, to prepare and print.

Preparing documents for printing on a computer may require several image processing operations including scaling, clipping, sharpening, various transformations and the like. These operations are performed either the application or by printer driver software normally included with the printer, or sometimes, by the printer controller. Several approaches to document preparation ad printing exist.

Some applications prepare a device independent bitmap of an image of the document to be printed. The bitmap is then sent to a printer via its corresponding printer driver software. In most cases, the application has no knowledge of the printer's requirements. For example, a user may decide to print a medium quality image using a certain kid of paper. This requires that an image of the document be created with a certain resolution and bit depth. The application cannot determine the resolution and/or bit depth needed to render output in accordance with the print parameters selected by the user. Such knowledge is contained in the printer driver. The application, having to accommodate any kind of printer, therefore takes a conservative approach and sends a copy of a high resolution bitmap of the image to the printer driver. The printer driver then performs additional processing (e.g. decimation) on the received copy of the high resolution image to generate output for the print at the appropriate resolution.

The bitmap is usually generated within the host computer (as described above) and transferred to the printer in compressed data format. The compressed bitmap is expanded in the printer and transferred to a print engine, which is the portion of the printer that controls the paper movement, toner, and mechanical drive system which moves the paper, as well as the electronic circuitry which controls the printing process. The print engine receives the bitmap data and converts it into the appropriate voltages to create a printed image.

The printed page itself is comprised of individual dots, called pixels. On a typical laser printer, for example, there may be 300, 600, or more pixels per inch. Each pixel is usually represented by a single data bit in the printer memory. As the laser print engine scans a line, the data bits corresponding to that line are read and the laser beam turns on or off depending on the logic level of the data bit stored in that memory location. At a resolution of 300 pixels per inch, a printer requires approximately one megabyte of memory to store the bitmap data file for an entire page. In order to reduce memory requirements, some printers may operate in a banding mode. A printer with banding mode capability breaks the printed down into a number of horizontal segments called bands. The printer accepts the bitmap data for only one band at a time. When the printer has processed the data for the first band, it can accept data for the second band and so forth.

As more sophisticated applications, computers and printers become available and are put into everyday use, the documents produced by users become more sophisticated, complex, and larger. Further, while the typically user may have a desktop printer in his or her office, with the advent of larger capacity, more sophisticated printers, network printing is fast becoming the norm for larger, more complex print jobs. Thus it is becoming commonplace for the larger, complex print jobs to be sent to a remotely located printer via a server over a printer network or the like. Remotely located printers require that a user or someone else go to the printer to retrieve a print job when it is complete. As described above, processing and printing a job can take a significant amount. Typically, a user does not know how long it will take to print his or her print job. A typical result is that a user will submit his or her print job and then go to the printer to stand and wait while the job is being printed.

In most of the operating systems in use today, the operating system ("OS")print spooler displays the current page being spooled and/or the total number of pages being spooled. This information is typically not useful to the user for the following reasons. First, the user is not able to estimate the amount of time that will be required to print the print job just by knowing the number of pages in the print job. Print jobs having only a few pages can take several minutes to print if the pages are complex. Second, even when the spooler display indicates that the print job is "complete," the print job may not yet be ready at the printer. The print job may have merely been passed to another spooler which is not visible to the user, or the printer itself may have spooled or queued the print job awaiting the completion of earlier submitted print jobs. Additionally, typically, other than described above, users receive little or no print job status feedback, such as pages completed or when the print job will be completed by the printer. If the user relies on the limited status reported by the OS spooler, the user usually ends up waiting at the printer for the print job to be completed, or sometimes discovering that the print job has not yet started printing.

Accordingly there is a need for a method to estimate the time required to print a print job and provide sufficient feedback to the user so that the user is reliably informed of print job status and when the print job is complete.

## SUMMARY OF THE INVENTION

In a preferred embodiment, the present invention provides a printer driver which estimates the amount of required to print a print job and displays the estimated print time to the user. The displayed print time is decremented as the print job is processed, counting down to zero as the print job has been completed by the printer. Thus the user knows when the print job has been completed and is available at the printer does not waste time physically at the printer waiting for a print job to print.

In a preferred embodiment of the present invention, a printer driver utilizes a predefined algorithm to measure the complexity of each page of a print job as it is received, and, as a function of the measured complexity, estimates the time required to print that page. A print job originates in with a user application and is received by the printer driver via a computer operating system ("OS"). As the printer driver receives the print job from the OS, it creates a spool file for the print job by spooling the print job to a storage device on a page-by-page basis. The printer driver calculates a complexity metric for each page of the print job as the page is spooled to the spool file. The time required to print each page is then estimated. The amount of time required for each page to print is a function (i.e., is based on) the corresponding complexity metric calculated for that page. The total estimated print time for the print job is the sum of the estimated times for each page to print, multiplied by the number of copies, if any. The estimated time to print a print job is also displayed to the user in a pop-up window. Once the printing of the print job has actually commenced at the printer, the displayed estimated time represents the time remaining until the print job is complete and counts down to zero as the print job is processed.

In one preferred embodiment, the print driver receives print job status reports from the printer as the print job is processed, including the commencement and completion of printing for each page and the actual time required to print the page. The actual time required to print a page is compared to the estimated time to print the page and the estimated time remaining displayed to the user is updated accordingly.

In a preferred embodiment, the present invention may be implemented as a method of estimating the time to print a print job utilizing the printer driver described above. The method preferably includes spooling a print job to a storage media while calculating a complexity metric for each page of the print job as the page is spooled to the storage media. Based on the corresponding complexity metric calculated for the page, calculating an estimated time to print each page of the print job. When the entire print job has been spooled, the estimated time required to print the print job is calculated and the estimated time for the print job is displayed to the user.. The estimated time required to print the print job, is the sum of the estimated times to print each page of the print job (multiplied by the number of copies, if more than one copy is to be printed).

Other aspects and advantages of the present invention will become apparent from the following detailed description, taken in conjunction with the accompanying drawings, illustrating by way of example the principles of the invention. The claims alone, not the preceding summary or the following detailed description, define the invention.

## DESCRIPTION OF THE DRAWINGS

The present invention will be described with reference to the accompanying drawings. The components in the drawings ane not necessarily to scale, emphasis instead being placed upon clearly illustrating the principles of the present invention. In the drawings like reference numbers indicate identical or functionally similar elements throughout the several views.

Fig. 1 illustrates a typical prior art computer-laser printer printing system;

Fig. 2 illustrates a functional block diagram of a computer-printer system for estimating the time to print a print job according to the principles of the present invention;

Fig. 3 is a functional block diagram illustrating the method of estimating the time to print a print job on a page-by-page basis;

Fig. 4 is a functional block diagram illustrating the calculation of total estimated time to print a print job; and

Fig. 5 is a flow chart illustrating the process of printing a document and updating the time estimate as the print job is processed.

## DETAILED DESCRIPTION OF THE INVENTION

As shown in the drawings for purposes of illustration, the present invention is preferably embodied in a printer driver which estimates and displays to a user the time to print a print job. The printer driver according to the present invention calculates a complexity metric for each page of the print job, and, based on the complexity metric, calculates an estimated time required to print the corresponding page. Most existing print systems do not provide a reliable print time to the user often resulting in the user waiting at a printer for the print job to be completed.

Referring now to Fig. 1, the system architecture of a typical prior art computer-printer system is illustrated. A prior art computer-printer system 100 typically includes a host computer 102 coupled to a printer 110. The host computer 102 and the printer 110 may be only two of several devices on a communications network (not shown) or may be simply connected to one another via a cable attached to the appropriate communications port (not shown). For example, the host computer 102 may be a personal computer (PC) or workstation coupled to a high capacity laser printer via a local area network (LAN) in an office environment. A print job usually originates in an application program 104 and is submitted by a user. The application program 104 makes calls to the operating system (OS) 106 which, in turn, calls the printer driver 108. The OS 106 may or may not spool the print job prior to sending it on to the printer driver 108. The printer driver 108 converts the print job data to page description language (PDL) and attaches the appropriate header and trailer providing instructions to the printer 110 how to process the data. For example, the printer driver 108 may convert the print job data stream to a binary bitmap. The printer driver 108 then transmits the data stream in a compressed data format with the attached header and trailer transmitted in ASCII bytes.

At the printer 110, the parser 112 accepts the data stream and the attached header and trailer from the host computer 102 and organizes the data stream into tokens. Tokens are streams of data that are associated in a meaningful lexical context. The parser 112 processes every of byte of data received by the printer 110 and creates a display list 114 stored within a memory device (not shown) in the printer. The display list 114 is sorted by virtue of where the object is located on the page. Bitmaps in the display list are generally stored in an uncompressed format. Other objects such as text are rather brief. For example, a single, simple rectangle running around the circumference of the page can be rather complex and generally requires approximately one megabyte of storage. On the other hand, a full page of text generally only requires approximately three to five kilobytes. An imager 116 translates the display list into a bitmap file suitable for the print engine 120. The bitmap data file is stored in a frame buffer 118 and transmitted to the print engine 120 at the appropriate time.

As can be seen from the above description, print job processing involves many varied steps of varying complexity. The processing of the print job through these steps consumes more or less time as a function of both the complexity of the print job itself and the efficiency of both the printer driver 108 and printer 110 in performing the various processing steps. The complexity of the print job depends on several factors including number of vectors, size and bit depth of raster images, and the number of complex graphic operations. The efficiency of the printer driver 108 and the printer 110, of course, depends on a large number of factors including code utilized to perform the various processing tasks.

Another area in which computer-printer systems are inefficient is that individual pages of a print job are often processed in an inefficient order taking more or less time to print the complete print job. For example, if the printer 110 is operating in the duplex mode (i.e., printing on both sides of the paper), the paper pathway taken by the page within the printer demands that side two of a page be printed before side one is printed. However, generally, computer-printer systems demand that side one of a page be processed before side two is processed. This means that side one of the page must be processed completely and stored within the printer memory as a bitmap data file. Then, side two of the page is completely processed and sent to the print engine 120 prior to side one being sent to the print engine. Thus not only the printer characteristics, but the mode of operation of the printer contribute to the time required to process and print a print job.

Referring now also to Fig. 2, an exemplary computer-printer system architecture including a printer driver in accordance with the principles of the present invention is shown. In the computer-printer system 200, a host computer 202 is coupled to a printer 210 via a data communications network (not shown). Communication between the host computer 202 and the printer 210 can be via any of a variety of well-known, conventional protocols over one or more of the Internet, PSTN networks, local area networks (LANs), and private wide area networks (WANs). One or more print servers (not shown) may also be coupled to the communications network and act as an intermediary between the host computer 202 and the printer 210. Print job data that is to be printed is transferred from the host computer 202 to the print server. The print server then assumes responsibility for transferring the print job to the printer 210. The printer 210 can be any of a wide variety of conventional printing devices such as, for example, a laser printer, an inkjet printer, an impact dot matrix printer, or a plotter.

In a preferred embodiment, the host computer 202 includes an operating system 206, one or more applications 204, a printer driver 208, a display (not shown) and one or more storage devices 214, such as a magnetic hard disk drive, for example. The printer driver 208 can be implemented at either the host computer 202, the printer 210, a print server, or, alternatively, at a combination of one or more of the host computer 202, the printer 210 and a print server. While only one printer driver 208 has been shown, it is to be appreciated that the computer-printer system 200 can include multiple printer drivers 208.

A print job typically originates with an application 204 when a user submits the print job by "clicking" on the "print" button on a printer menu. The application 204 makes calls into the operating system 206, which, in turn makes calls to the printer driver 208. The operating system 206 provides the print job request and the corresponding data to the printer driver 208, which translates and formats the print request and corresponding data into a representation (page description language) that is understandable by the printer 210. The translated and formatted print job request and data are then provided to a network/printer interface 220 which transfers the print job to the appropriate printer. The network/printer interface 220 is an input/output (I/O) interface that allows the printer driver 206 to communicate with the host computer 202 and the printer 210 either directly or via a communications network.

Operating system 206 represents any of a wide variety of conventional operating systems. Examples of such operating systems include, but are not limited to, any of the "Windows" brand of operating systems available from Microsoft Corporation of Redmond, Washington, or the Mac OS available from Apple Computer of Cupertino, California.

In a preferred embodiment, prior to converting the print job data to a page description language, the printer driver 208, according to the present invention, creates a private spool file 213 stored in storage device 214. Each print job, as it is received from the operating system 206, is spooled to its corresponding spool tile 213. Additionally, the printer driver 202 calculates a complexity metric (212), on a page-by-page basis, for each page as the page is being spooled to its spool file 213. Based on the corresponding complexity metric, the printer driver 206 then calculates an estimated time ($E_p$) to print the page (216). When the application 204 has sent the complete print job, the application 204 makes a call to the operating system 206 which, in turn, makes a call to the printer driver 208 informing the printer driver that the print job is complete. The estimate time calculated for each page of the print job is retained in memory to be compared with the actual time required to process and print the page. As discussed in more detail below, the comparison between the estimated and actual times to print a page is used to update the displayed estimated time left during the printing process.

When the complete print job has been transferred and spooled, the printer driver 208 calculates the total estimated time ($E_j$) to process and print the print job. The total estimated time is the sum of the estimated times for each page of the print job multiplied by the number of copies, if any, desired. Once the complete print job has been spooled and the total estimated print time calculated, the printer driver 208 continues processing the print job (i.e., converts the print job data to an appropriate page description language, for example) and sends the print job to the printer 210 via the network/printer interface 220. The printer driver 202 also displays the total estimated time for the user in a window 222 on the host computer 202 display. The total estimated time for the print job to print is displayed as "time left" 224 or "time remaining" to completion of printing of the print job.

The total estimated time represents an estimate of the amount of time required for the printer driver 208 to complete the required processing of the print job after the print job has been spooled, the time for transferring the print job to the printer 210 and the time required for the printer 210 to process and physically print the print job. When the printer 210 actually begins processing and printing the print job, the displayed total estimated time 224 will be decremented, counting down to zero as the print job processing proceeds indicating the time remaining until the print job is complete. When the time left 224 reaches zero, the job is complete and ready for pickup at the printer 210. During the time that the printer is processing the print job, job status reports will be sent to the printer driver 208 via the network/printer interface 220 . These status reports provide such information as page start, page end, and the actual amount of time required to process and print the page, for example. The status reports are used by the printer driver and the network/printer interface 220 to update the displayed time left 224 based on the actual time required to process and print a page.

As discussed above, the printer driver 208 calculates a complexity metric (212) for each page, on a page-by-page basis, as the print job is spooled to the spool file 213. The complexity metric is calculated for each page using an algorithm based on the following factors:

the number of vectors required to describe the page;
the number of complex graphic operations such as Cartesian Transformation Matrix application, Alpha Blending, Gradient Fills, and irregular Clip Regions, for example; the number and types of complex graphic operations may be increased or decreased depending on the imaging characteristics of the particular printing device; and
the dimensions and bit depth of raster images included on the page.

In a preferred embodiment, a mathematical expression or formula for the page complexity metric (PC) is given by:

$$PC = V*V_t + C*C_t + B*B_t$$

Where:

PC is the page complexity metric value;
V is the number of vectors on the page;
$V_t$ is a multiplier that represents the time cost of printing a vector;
C is the number of complex operations on the page;
$C_t$ is a multiplier that represents the time cost of applying a complex operation;
B is the bitmap complexity of the page; and
$B_t$ is a multiplier that represents the time cost of printing a bitmap.

The bitmap complexity for a page (B) is the sum of the individual bitmap complexity metrics (I) for all the bitmaps on the page and is calculated by:

$$B = \Sigma I$$

$$I = h*w*d$$

Where:

h is the height of the bitmap (in pixels);
w is the width of the bitmap (in pixels); and
d is the bit-depth of the bitmap; the bit-depth is the number of bits required to represent the color of a single pixel in the bitmap; typical values include, but are not limited to, 1, 2, 4, 8, 16, 24, 32, and 64.

The estimated number of seconds ($E_p$) required to print the page is calculated as follows:

$$E_p = PC*P + S.$$

Where:

P is a multiplier that represents the time cost of processing a page in the printer; this represents the overhead that the printer has in simply parsing the incoming print data; and
S is the minimum number of seconds required for the printer print engine to print a blank page; this is calculated based on the rated engine speed of the printer. The formula is simply S = (60/rated engine speed). For example, for a 32 page per minute printer, S = 1.875.

The values for the constants (multipliers) $V_t$, $C_t$, $B_t$ and P are dependent on the characteristics of the particular printer in use and are set to default values determined during the printer manufacture.

Fig. 3 is a functional block diagram illustrating the process of calculating the page complexity metric (PC) and estimating the time ($E_p$) required for each page of the print job to be processed and printed. As described in more detail above, the print driver 208 receives a call (302) from the operating system 206 and begins receiving a print job and the corresponding data representing a document, for example. As the print job is received from the operating system 206, it is spooled to the spool file 213 at storage device 214. The printer driver 208 first determines (304) whether or not any additional special process is required for the OS call (302) and handles it accordingly (other print job processing functions of the printer driver do not form a part of the present invention and will not be discussed here). At the start of the document spooling process (306), the estimated time ($E_j$) and the number of pages (N) are set to zero, the constants initialized and the message "Spooling Document" is displayed in the display window 222 for the user. At the start of each page (310), the estimated time for the page ($E_p$), the complexity metric for the page (PC) and the values for the number of vectors (V) and complex operations (C), and the bitmap complexity (B) for the page are set to zero. Then, as the page is spooled, the values for the bitmap complexity (B) (314), for the number of vectors (V) (316), and the number of complex operations (C) (318) are calculated. At the end of the page (312) (i.e., when the page is complete), the page number N is incremented, the page complexity (PC) and the estimated time for the page ($E_p$) are calculated, and the total estimated time ($E_j$) for the pages completed is calculated, that is, total estimated time for the print job is a running sum of the previously calculated estimated times for each page incremented by the estimated time for the present page. At the end of the document (i.e., the completion of spooling for the complete print job) where N = the total number of pages in the document (308), the total estimated time to completely process and print the print job is calculated.

Fig. 4 is a block diagram illustrating the calculation of the total estimated time to process and print the print job. The total estimated time ($E_j$) for the print job is the accumulated estimated time for all of the pages (312) times the number of copies desired, if any (402). The total estimated time for the print job is calculated in seconds, then converted (404) to hours, minutes and seconds. The total estimated time ($E_j$) in hours, minutes and seconds is then displayed (406) for the user as "time left" in the display window 222 (as shown in Fig. 2).

Fig. 5 is a flow chart illustrating the print job processing and printing process as the print job is read from the spool file 213 and handled by the printer driver 208 and the printer 210. At the start of the print job (502) the total number of pages in the print job (the number of pages in the document times the number of copies, if any) is calculated and the number of page end events (NumEndPages) and the current page number (CurrPage) are set to zero. The spool file 213 is accessed (504) to determine if any data is present for the current print job. If yes, then the next item to be processed (either a printable item such as a bitmap, for example, or a control operation such as a start page command, for example) is downloaded (510) to the print driver for conversion to page description language 218 and sent to the printer 210 (512). If no data for the current print job is present in the spool file 213, the number of end page events is compared to the value for total pages (506). If the number of end page events is equal to the value for total pages, the print job is complete and a message "job complete" is displayed (508) to the user in the dialog window 222. If the number of end page events is less than the value for total pages, the process checks for an end page event (522) from the printer. When the printer 210 receives the PDL data stream from the printer driver 208, it is determined (514) whether or not the printer 210 is busy and printing of the current print job will be delayed. If the printer is busy and printing of the current print job will be delayed, a message "wait" is displayed (516) to the user in the dialog window 222. If the printer 210 is not busy and the print job is to be processed immediately, the received data is checked for the start of a new page (i.e., the printer is physically starting to print a new page) (518). If a new page is commencing, the value for CurrPage is incremented (520) and the operating system 206 is called for the current time. The current time (i.e., the actual time) that processing and printing the current page is started is recorded in order to calculate the actual time ( $A_p$[CurPage]) required to process and print the page. The process and printing of the received data is monitored and when complete, a check for an end page event is made (522). If an end page event is not received (524), the process goes back to check the spool file 213 for the next item to be processed (504). If a page end event is received, the value for the number of end page events (NumEndPage) is incremented (526) and the operating system 206 is called for the current time that the end page event was received. The actual time of the end page event is compared with the actual time the page commenced processing and printing to determine the actual time required to print the page. The actual time to print the page ($A_p$) is compared to the estimated time to print the page ($E_p$) and the result is used by the printer driver 208 to update the "time left" value displayed to the user in the dialog window 222.

In addition to the foregoing, the logic of the present invention can be implemented in hardware, software, firmware, or a combination thereof. In the preferred embodiment(s), the logic is implemented in software or firmware that is stored in a memory and that is executed by a suitable instruction execution system. If implemented in hardware, as in an alternative embodiment, the logic can be implemented with any or a combination of the following technologies, which are all well known in the art: a discrete logic circuit(s) having logic gates for implementing logic functions upon data signals, an application specific integrated circuit (ASIC) having appropriate logic gates, a programmable gate arrays(s) (PGA), a field programmable gate array (FPGA), etc.

Also, the flow charts and diagrams of Figs. 3, 4 and 5 show the architecture, functionality, and operation of a possible implementation of the logic. In this regard, each block represents a module, segment, or portion of code, which comprises one or more executable instructions for implementing the specified logical function(s). It should also be noted that in some alternative implementations, the functions noted in the blocks may occur out of the order noted in Figs. . For example two or more blocks shown in succession in Figs. 3, 4 and 5 may in fact be executed substantially concurrently or the blocks may sometimes be executed in the reverse order, depending upon the functionality involved.

Finally, the logic which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer-readable medium can be, for example, but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM)(magnetic), a read-only memory (ROM)(magnetic), an erasable programmable-read-only memory (EPROM or Flash memory), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

While having described and illustrated the principles of the present invention with reference to various preferred embodiments and alternatives, it will be apparent to those familiar with the art that the invention can be further modified in arrangement and detail without departing from those principles. Accordingly, it is understood that the present invention includes all such modifications that come within the terms of the following claims and equivalents thereof.

## Claims

**1.** In a computer system (200) including an operating system (206), a display, one or more user applications (204) and a storage media (214), the computer coupled to one or more printers (210), a method for estimating the time required to print a print job, the method comprising the steps of:

spooling a print job to a storage media (214);

calculating a complexity metric (212) for each page of the print job as the page is spooled to the storage media (214); and

calculating an estimated time (216) to print each page of the print job, the estimated time to print a page being a function of the corresponding complexity metric calculated (212) for the page.

**2.** The method of Claim 1 including the further step of calculating an estimated time to print the print job, the estimated time to print the print job being the sum of the estimated times to print each page of the print job.

**3.** The method of Claim 2 including the further step of displaying to a user the estimated time (224) to print the print job.

**4.** The method of Claim 3 including the further step of decrementing the estimated time to print the print job, the estimated time to print the print job counting down to zero as the print job processing proceeds, the decremented estimated time representing the estimated time remaining (224) to complete the print job.

**5.** The method of Claim 4 including the further steps of :

sending the print job to a printer(210);
receiving print job status reports from the printer (210) as the print job is processed by the printer (210); and
updating the estimated time remaining (224) based on the print job status reports.

**6.** The method of Claim 1 wherein the step of calculating the complexity metric (212) for each page includes the steps of calculating values for the number of vectors on the page, the number of complex operations on the page, and the bitmap complexity of the page.

**7.** In a computer system (200) including an operating system (206), a display, one or more user applications (204) and a storage media (214), the computer coupled to one or more printers (210), a printer driver (208) for estimating the time required to print a print job, the printer driver (208) comprising machine executed means for:

receiving a print job from the computer system operating system (206);

on a page-by-page basis, spooling the print job to a storage media (214);

calculating a complexity metric (212) for each page of the print job as the page is spooled to the storage media (214);

calculating an estimated time (216) to print each page of the print job, the estimated time (216) to print a page being a function of the corresponding complexity metric calculated for such page; and

calculating an estimated time (216) to print the print job, the estimated time to print the print job being the sum of the estimated times to print each page of the print job.

**8.** A printer driver (208) as in Claim 7 further including machine executed means for generating a display displaying to a user the estimated time (224) to print the print job.

**9.** A computer program product for estimating the amount of time (216) required to print a print job and displaying the estimated time (224) to a user, the computer program product comprising:

a computer usable medium having computer readable program code means embodied therein for causing a computer to:

(a) spool a print job to a storage media (214);
(b) calculate a complexity metric (212) for each page of the print job as the page is spooled to the storage media (214); and
(c) calculate an estimated time (216) to print each page of the print job, the estimated time to print a page being a function of the corresponding complexity metric calculated for the page.

**10.** The computer program product of Claim 9 wherein the computer readable program code means further causes the computer to display to a user the estimated time (224) to print the print job.

**11.** The computer program product of Claim 10 wherein the computer readable program code means further causes the computer to decrement the estimated time to print the print job, the estimated time to print the print job counting down to zero as the print job processing proceeds, the decremented estimated time representing the estimated time remaining (224) to complete the print job.

**12.** The computer program product of Claim 9 wherein the computer readable program code means step (b) further causes the computer to:

(a) calculate the values for the number of vectors on the page, the number of complex operations on the page, and the bitmap complexity of the page; and
(b) multiply each of the values for the number of vectors on the page, the number of complex operations on the page, and the bitmap complexity of the page by a separate predetermined constant.

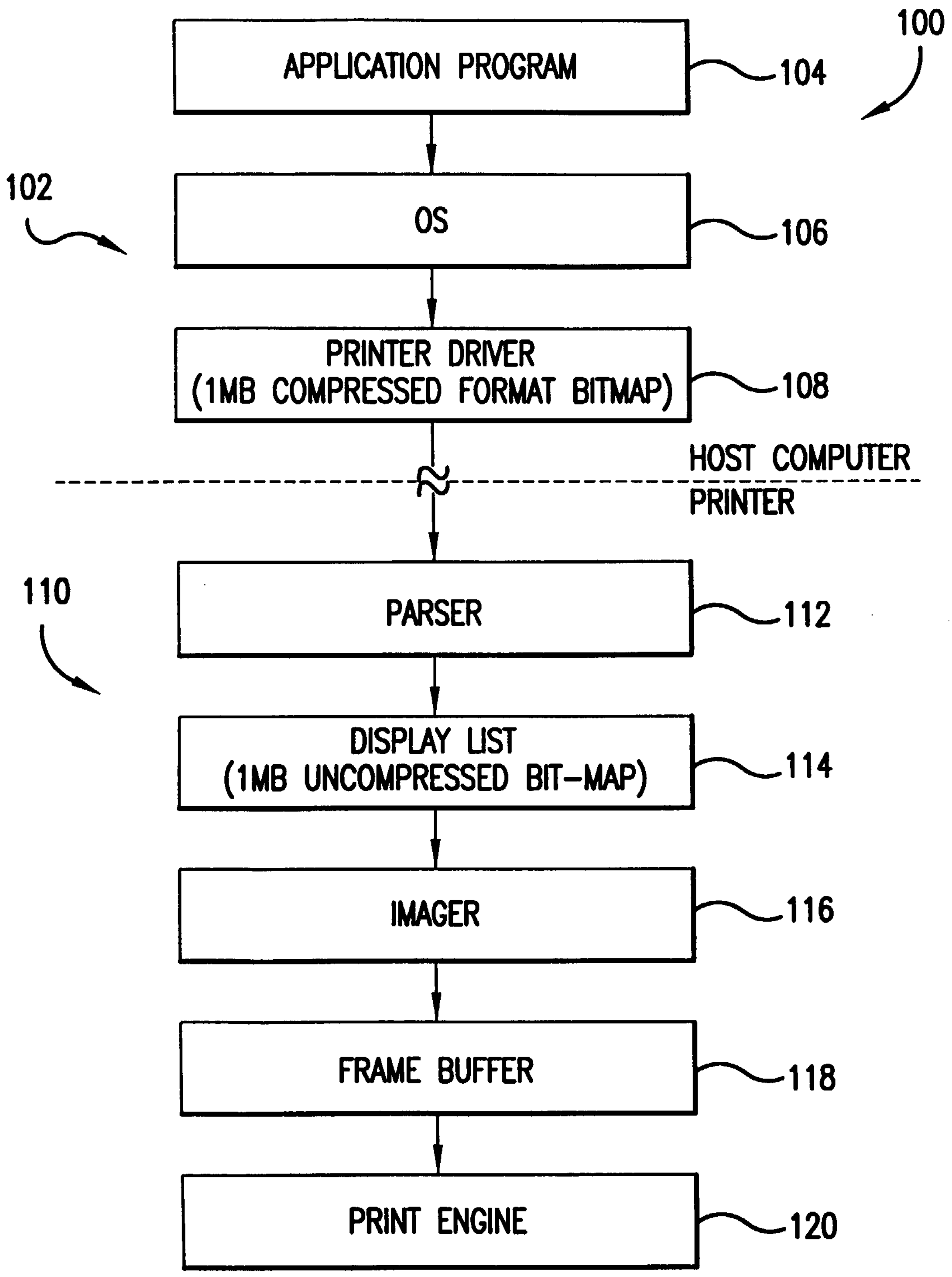


FIG.1
PRIOR ART

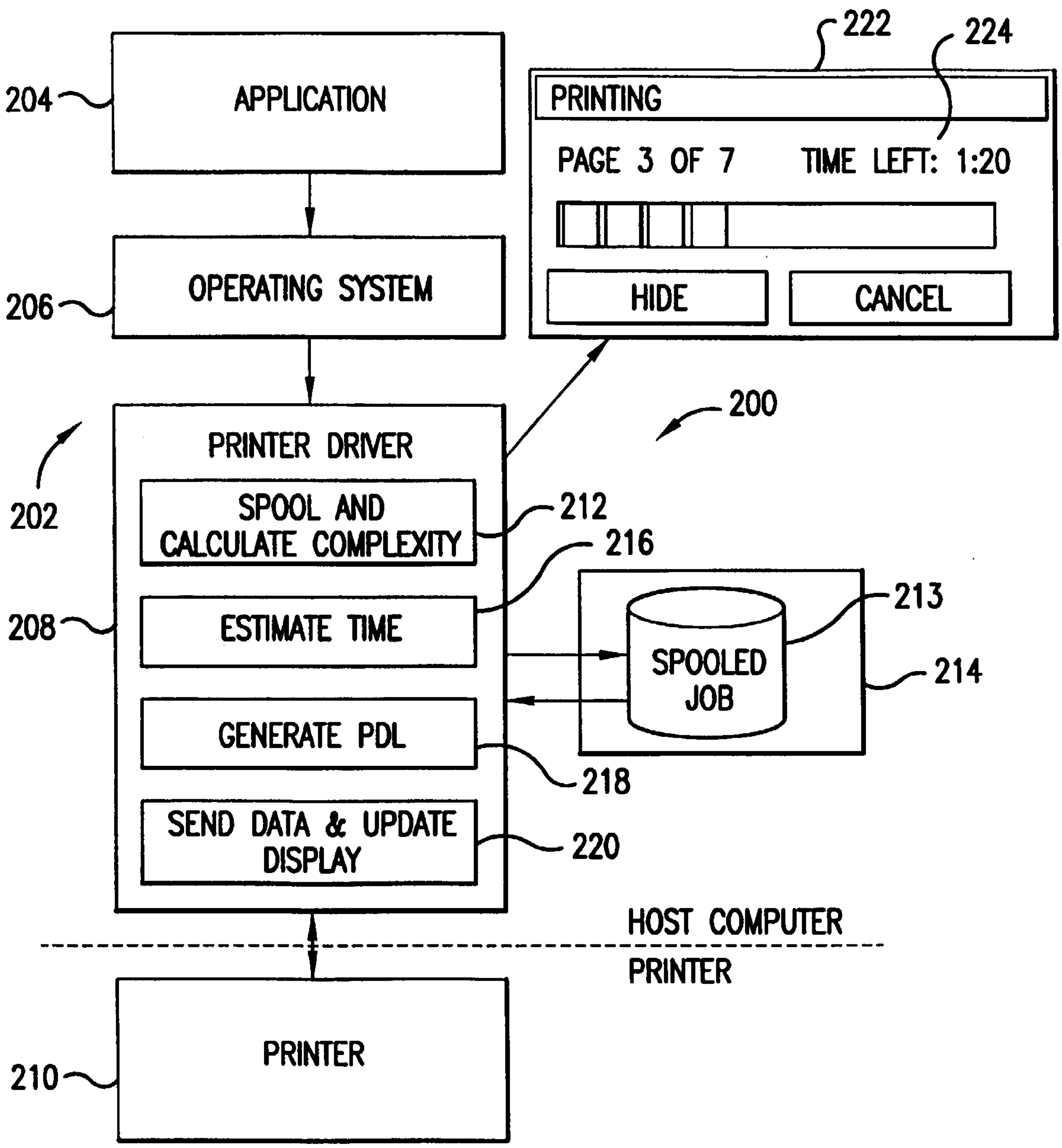
222
224
PRINTING
PAGE 3 OF 7 TIME LEFT: 1:20
HIDE
CANCEL
204
APPLICATION
206
OPERATING SYSTEM
200
202
PRINTER DRIVER
SPOOL AND CALCULATE COMPLEXITY
212
216
208
ESTIMATE TIME
SPOOLED JOB
213
214
GENERATE PDL
218
SEND DATA & UPDATE DISPLAY
220
HOST COMPUTER
PRINTER
210
PRINTER

FIG.2

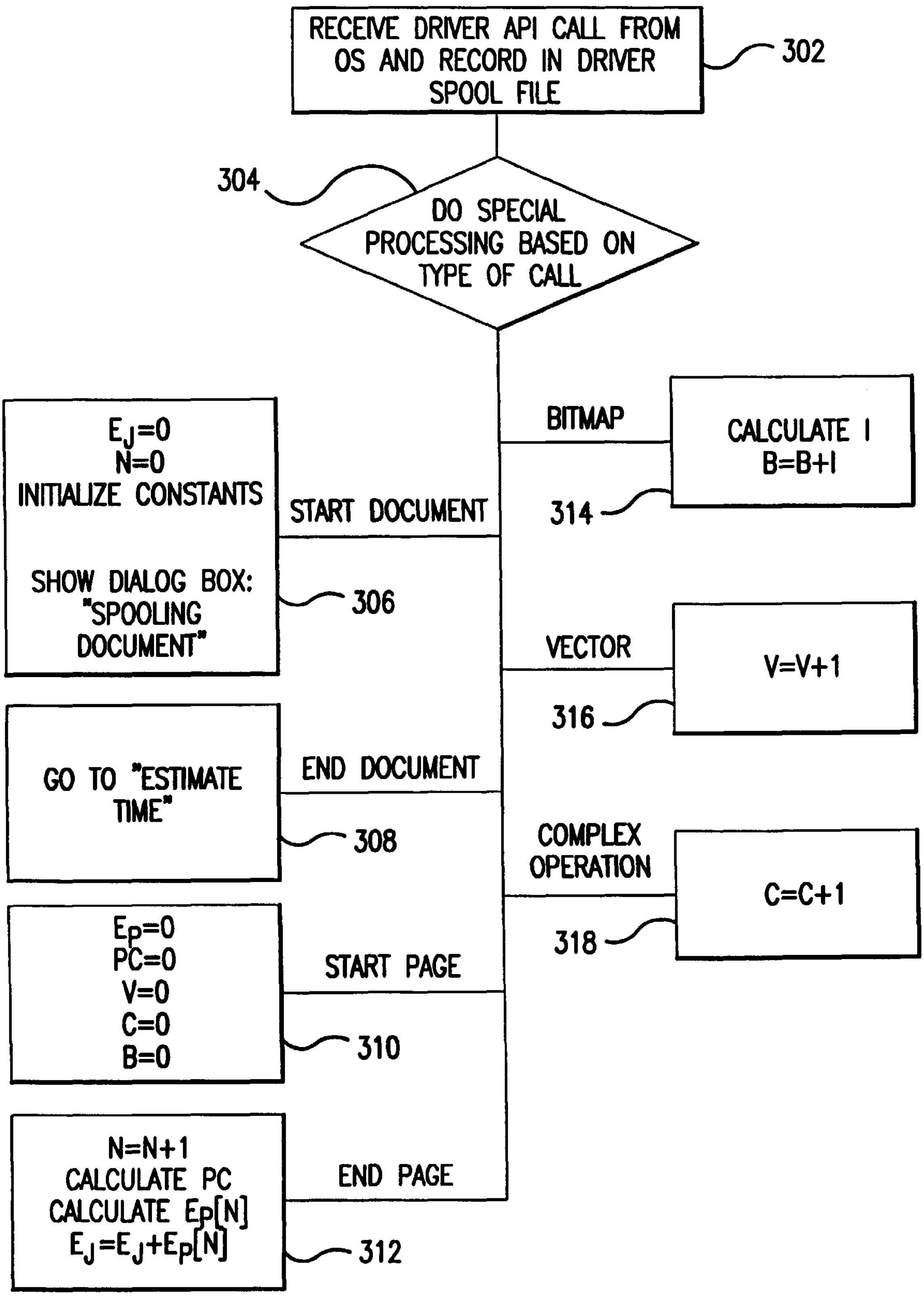
RECEIVE DRIVER API CALL FROM OS AND RECORD IN DRIVER SPOOL FILE
302
304
DO SPECIAL PROCESSING BASED ON TYPE OF CALL
$E_J$=0
N=0
INITIALIZE CONSTANTS
SHOW DIALOG BOX: "SPOOLING DOCUMENT"
START DOCUMENT
306
GO TO "ESTIMATE TIME"
END DOCUMENT
308
$E_P$=0
PC=0
V=0
C=0
B=0
START PAGE
310
N=N+1
CALCULATE PC
CALCULATE $E_P$[N]
$E_J$=$E_J$+$E_P$[N]
END PAGE
312
BITMAP
CALCULATE I
B=B+I
314
VECTOR
V=V+1
316
COMPLEX OPERATION
C=C+1
318

FIG.3

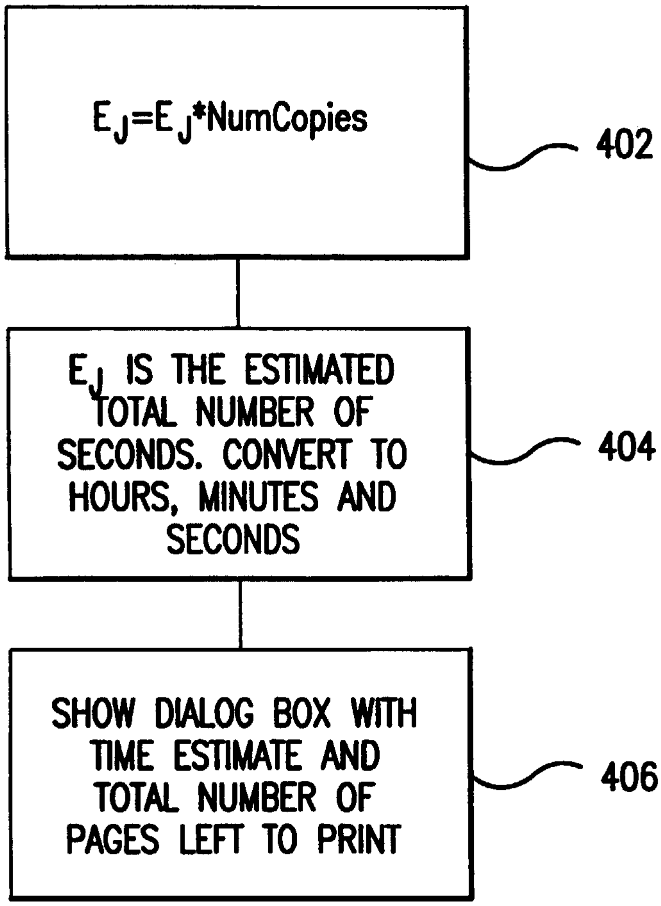
$E_J = E_J$*NumCopies
402
$E_J$ IS THE ESTIMATED TOTAL NUMBER OF SECONDS. CONVERT TO HOURS, MINUTES AND SECONDS
404
SHOW DIALOG BOX WITH TIME ESTIMATE AND TOTAL NUMBER OF PAGES LEFT TO PRINT
406

FIG.4

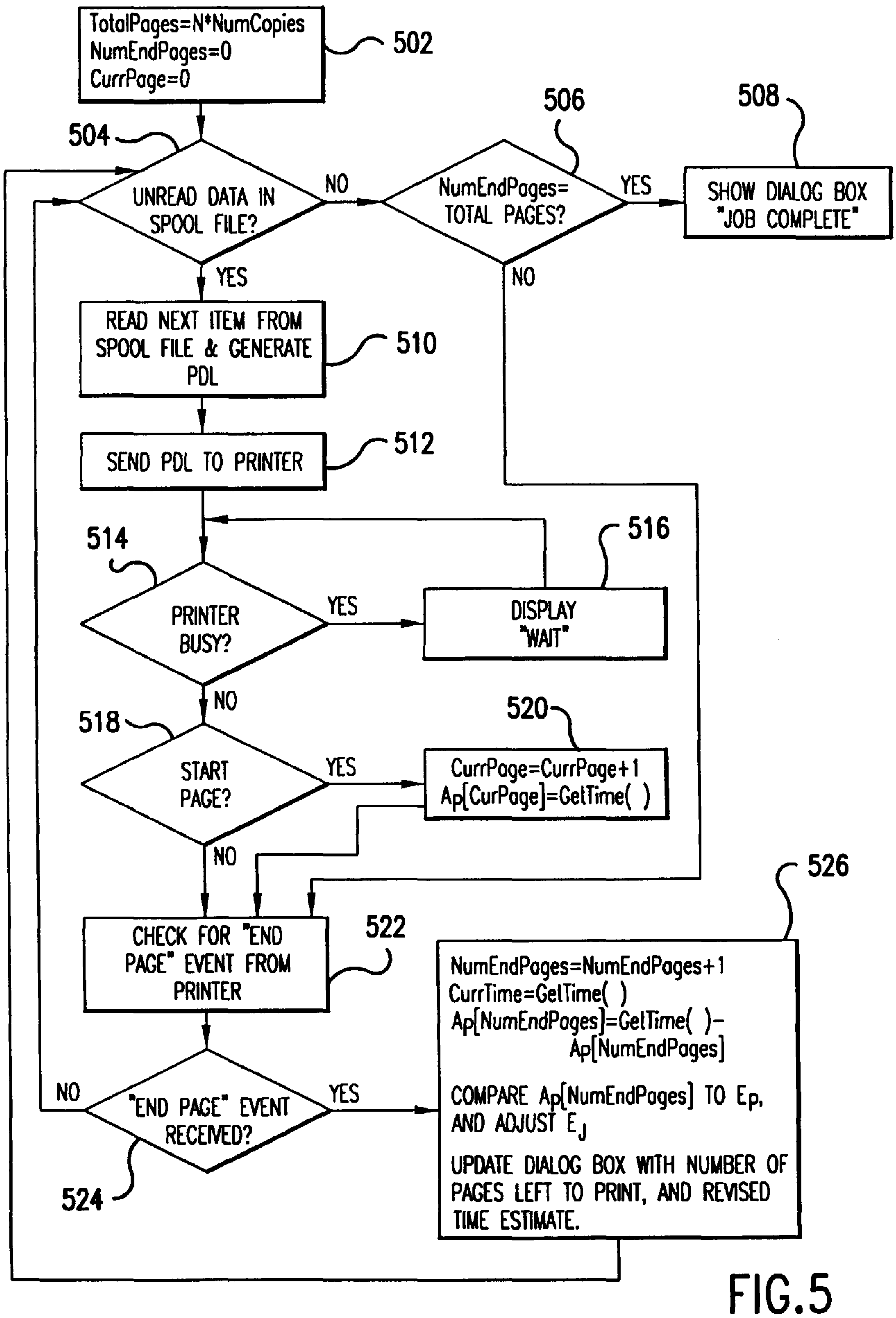
TotalPages=N*NumCopies
NumEndPages=0
CurrPage=0
502
504
UNREAD DATA IN SPOOL FILE?
NO
506
NumEndPages= TOTAL PAGES?
YES
508
SHOW DIALOG BOX "JOB COMPLETE"
NO
YES
READ NEXT ITEM FROM SPOOL FILE & GENERATE PDL
510
SEND PDL TO PRINTER
512
514
PRINTER BUSY?
YES
516
DISPLAY "WAIT"
NO
518
START PAGE?
YES
520
CurrPage=CurrPage+1
Ap[CurPage]=GetTime( )
NO
526
CHECK FOR "END PAGE" EVENT FROM PRINTER
522
NumEndPages=NumEndPages+1
CurrTime=GetTime( )
Ap[NumEndPages]=GetTime( )-Ap[NumEndPages]
COMPARE Ap[NumEndPages] TO Ep, AND ADJUST EJ
UPDATE DIALOG BOX WITH NUMBER OF PAGES LEFT TO PRINT, AND REVISED TIME ESTIMATE.
NO
"END PAGE" EVENT RECEIVED?
YES
524

FIG.5